(19) Europäisches Patentamt
European Patent Office
Office européen des brevets

(11) EP 1 817 958 A1

(12) **EUROPÄISCHE PATENTANMELDUNG**

(43) Veröffentlichungstag:
**15.08.2007 Patentblatt 2007/33**

(51) Int Cl.:
***A01P 13/00*** *(2006.01)* ***A01N 47/36*** *(2006.01)*

(21) Anmeldenummer: **07109418.9**

(22) Anmeldetag: **30.08.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **31.08.2000 DE 10043121**

(62) Dokumentnummer(n) der früheren Anmeldung(en) nach Art. 76 EPÜ:
**06110045.9 / 1 661 459**
**01980303.0 / 1 315 420**

(71) Anmelder: **BASF Aktiengesellschaft**
**67056 Ludwigshafen (DE)**

(72) Erfinder:
- **Zagar, Cyrill**
  **Kowloon, Hong Kong (CN)**
- **Nuyken, Wessel**
  **67166, Otterstadt (DE)**
- **Schmidt, Oskar**
  **67105, Schifferstadt (DE)**
- **Jäger, Karl-Friedrich**
  **67117, Limburgerhof (DE)**
- **Westphalen, Karl-Otto**
  **67346, Speyer (DE)**

Bemerkungen:
Diese Anmeldung ist am 01- 06 - 2007 als Teilanmeldung zu der unter INID-Kode 62 erwähnten Anmeldung eingereicht worden.

(54) **HERBIZIDE MISCHUNGEN**

(57) 1. Herbizide Mischung, enthaltend
a) Tritosulfuron der Formel I oder ein landwirtschaftlich brauchbares Salz davon

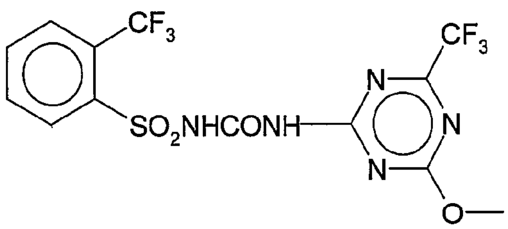

I

b) Sulfosulfuron der Formel V, oder dessen landwirtschaftlich brauchbaren Salze

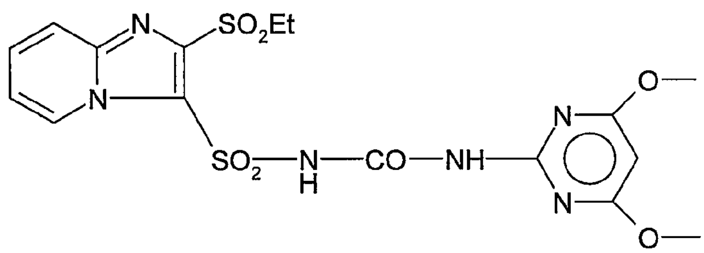

V

EP 1 817 958 A1

**Beschreibung**

Die vorliegende Erfindung betrifft eine herbizide Mischung mit synergistischer Wirkung aus Tritosulfuron und mindestens einem weiteren Herbizid sowie gegebenenfalls mindestens einem flüssigen oder festen Trägerstoff und gegebenenfalls mindestens einem oberflächenaktiven Stoff.

Außerdem betrifft die Erfindung ein Verfahren zur Bekämpfung von unerwünschtem Pflanzenwuchs, insbesondere in Getreide- oder Maiskulturen.

Herbizide Mischungen von Sulfonylharnstoffen, wie beispielsweise Tritosulfuron, mit bestimmten anderen Herbiziden sind aus der WO 97/10714 bekannt.

Über die in der WO 97/10714 hinaus sind noch weitere Herbizide bekannt wie beispielsweise aus Farm Chemicals Handbook 2000, Vol. 86, Meister Publishing Company, 2000 (Sulfosulfuron, Acifluorfen, Acifluorfen-Natriumsalz, Carfentrazon-ethyl, Cinidon-ethyl, Flumiclorac-pentyl, Fluthiacet-methyl, Oxyfluorfen, 2,4-D, Dicamba, Dichlorprop-P, Fluroxypyr-meptyl, MCPA, Mecoprop-P, Diflufenican, Flurtamone), EP 559814 (Tritosulfuron, Tritosulfuron-Natriumsalz, Tritosulfuron-Calciumsalz), EP 507171 (Flucarbazon, Propoxycarbazon), The 1997 Brighton Crop Protection Conference Weeds, Conference Proceedings Vol. 1, S. 45 (Fluazolat (= JV 485 oder Isopropazol)) und S. 59 (Azafenidin), US 5344812 (Benzfendizon) Agrow, Nr. 324, 12.03.1999, S. 26 (Tritosulfuron, Procarbazon-Natriumsalz, Florasulam, Benzfendizon, Butafenacil), Agrow, Nr. 347, 03.03.2000, S. 22 (Flufenpyr, Flufenpyr-ethyl), WO 97/15576 (Profluazol), EP 361114 (Pyraflufen-ethyl), B. Hock, C. Fedtke, R.R. Schmidt, Herbizide, Georg Thieme Verlag, Stuttgart 1995, S. 154 (Flurochloridone), S. 254 (2,4-DB), S. 238 (Fluroxypyr) EP 239414 (Beflubutamid). Flupyrsulfuron-methyl, Foramsulfuron, Iodosulfuron-methyl, Mesosulfuron-methyl, Mesotrione, Pethoxamid und Amicarbazone sind bekannte Herbizide und Mefenpyr-diethyl und Isoxadifen-ethyl bekannte Safener, s. z. B. The Compendium of Pesticide Common Names (http://www.hclrss.demon.co.uk/index.html).

Bei Pflanzenschutzmitteln ist es grundsätzlich wünschenswert, die spezifische Wirkung eines Wirkstoffs und die Wirkungssicherheit zu erhöhen. Der Erfindung lag daher die Aufgabe zugrunde, die Wirkung des Tritosulfurons der Formel I oder eines landwirtschaftlich brauchbaren Salzes davon zu erhöhen.

Diese Aufgabe wurde gelöst durch eine herbizide Mischung, enthaltend

a) Tritosulfuron der Formel I oder ein landwirtschaftlich brauchbares Salz davon

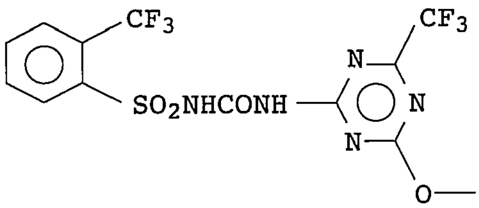

I

b) mindestens ein weiteres Herbizid, ausgewählt aus der Gruppe bestehend aus Florasulam der Formel II, Flucarbazon der Formel III, Propoxycarbazon der Formel IV, Sulfosulfuron der Formel V, Amicarbazone der Formel XXIX, Pethoxamid der Formel XXX, Mesotrione der Formel XXXI, Mesosulfuron-methyl der Formel XXXII, Iodosulfuron-methyl der Formel XXXIII, Foramsulfuron der Formel XXXIV, Flupyrsulfuron-methyl der Formel XXXV, Beflubutamid der Formel XXVIII, Carfentrazon-ethyl der Formel X, Fluazolat der Formel XII oder Pyraflufen-ethyl der Formel XIX sowie deren landwirtschaftlich brauchbaren Salzen.

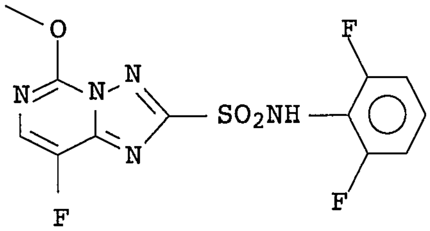

II

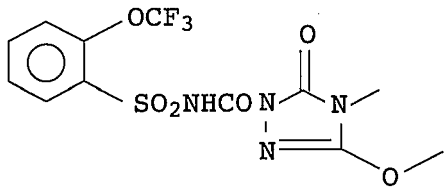

III

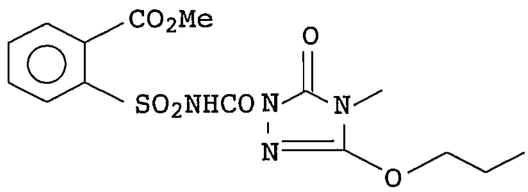

IV

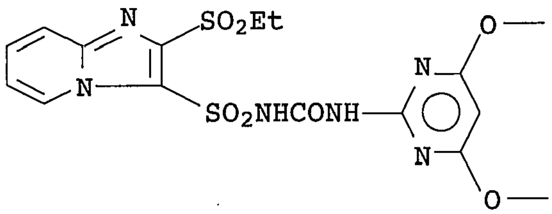

V

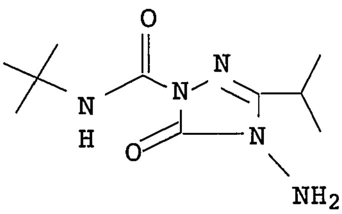

XXIX

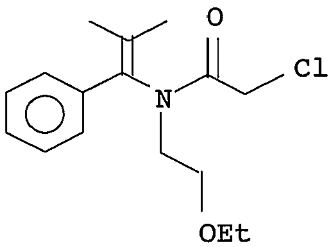

XXX

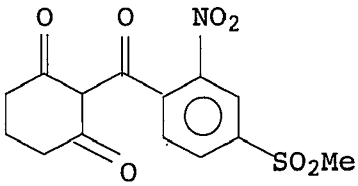

XXXI

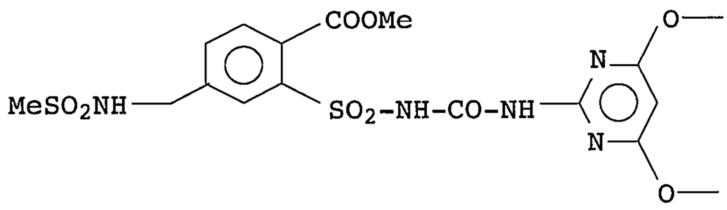

XXXII

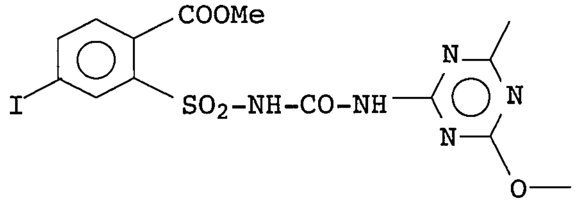

XXXIII

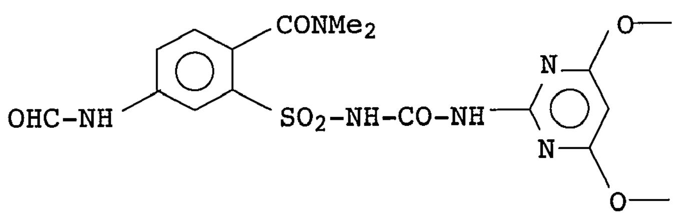

XXXIV

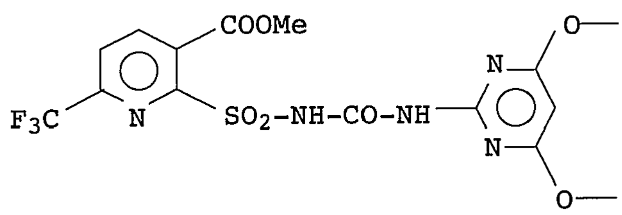

XXXV

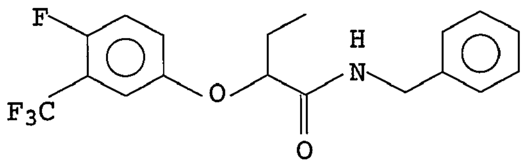

XXVIII

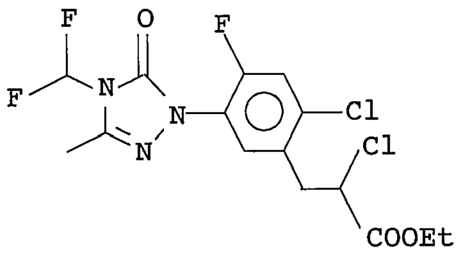

X

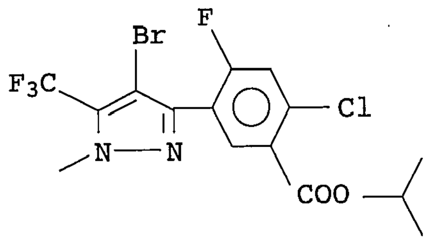

XII

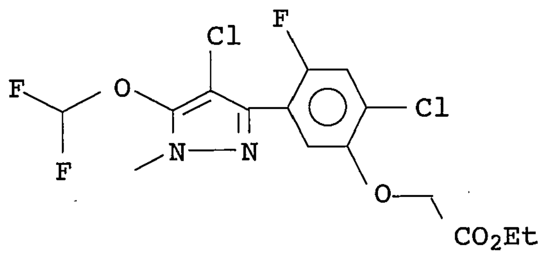

XIX

Bei der erfindungsgemäßen herbiziden Mischung können noch weitere Herbizide c) mitverwenden werden, ausgewählt aus der Gruppe bestehend aus Acifluorfen, Azafenidin, Benzfendizon, Butafenacil, Cinidon-ethyl, Flufenpyr, Flufenpyr-ethyl, Flumiclorac-pentyl, Fluthiacet-methyl, Oxyfluorfen, Profluazol, 2,4-D, 2,4-DB, Dicamba, Dichlorprop-P, Fluroxypyr, Fluroxypyr-meptyl, MCPA und Mecoprop-P.

Darüber hinaus können auch Safener d) mitverwendet werden, ausgewählt aus der Gruppe bestehend aus Mefenpyr-diethyl der Formel XXXVI und Isoxadifen-ethyl der Formel XXXVII, um die Kulturpflanzenverträglichkeit zu erhöhen.

Ferner wurden Verfahren zur Bekämpfung von unerwünschtem Pflanzenwuchs mit der erfindungsgemäßen Mischung sowie deren Verwendung zur Bekämpfung von unerwünschtem Pflanzenwuchs, insbesondere in Getreide- und Maiskulturen, gefunden.

Die Herbizide c) haben folgende Formeln:

Acifluorfen der Formel VI,

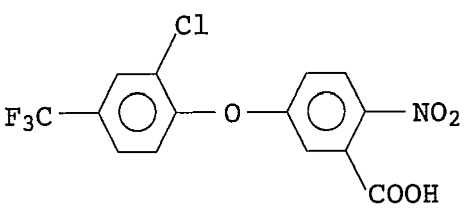

VI

Azafenidin der Formel VII,

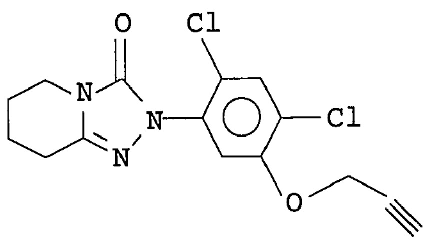

VII

Benzfendizon der Formel VIII,

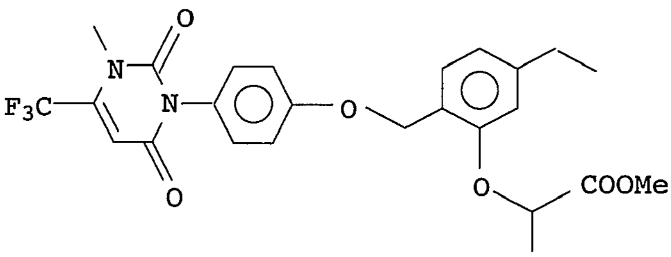

VIII

Butafenacil der Formel IX

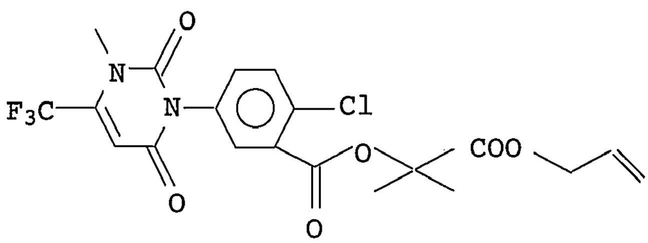

IX

Cinidon-ethyl der Formel XI

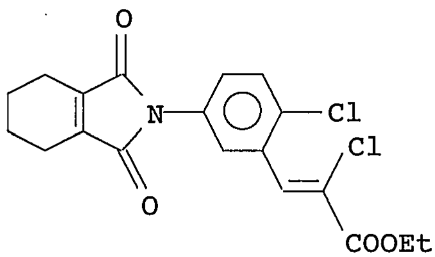

XI

Flufenpyr der Formel XIII,

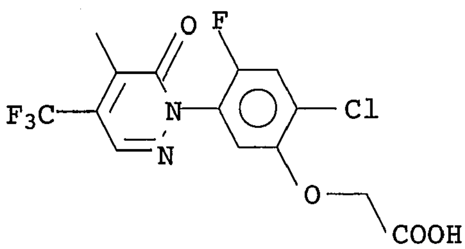

XIII

Flufenpyr-ethyl der Formel XIV,

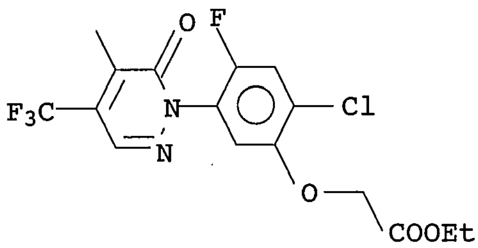

XIV

Flumiclorac-pentyl der Formel XV,

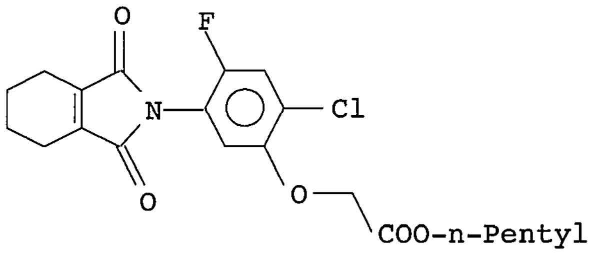

XV

Fluthiacet-methyl der Formel XVI

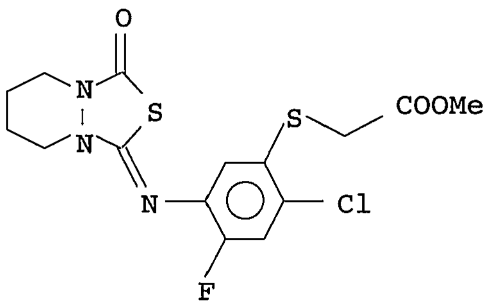

XVI

Oxyfluorfen der Formel XVII,

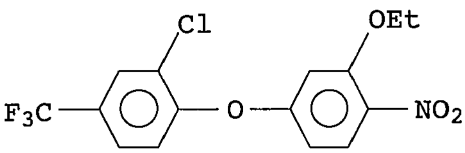

XVII

Profluazol der Formel XVIII,

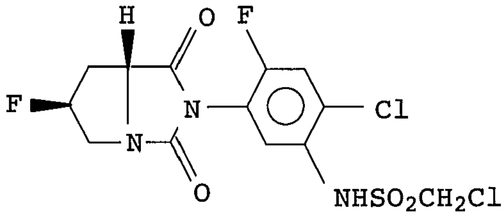

XVIII

2,4-D der Formel XX,

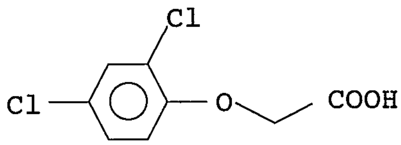

XX

2,4-DB der Formel XXI,

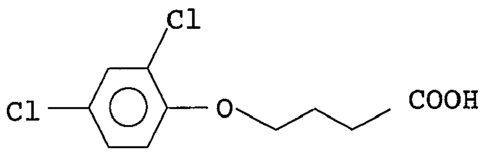

XXI

Dicamba der Formel XXII,

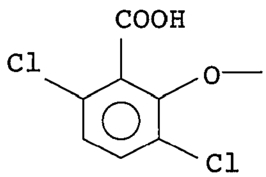

XXII

Dichlorprop-P der Formel XXIII,

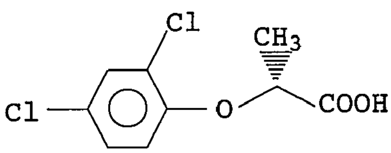

XXIII

Fluroxypyr der Formel XXIV

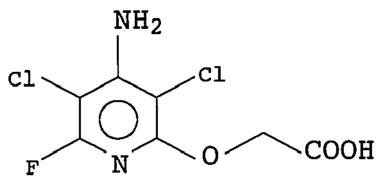

XXIV

Fluroxypyr-meptyl der Formel XXV

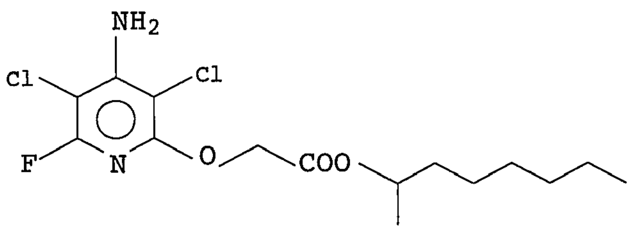

XXV

MCPA der Formel XXVI,

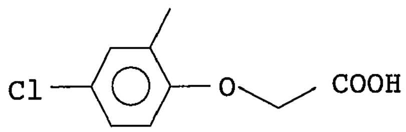

XXVI

Mecoprop-P der Formel XXVII.

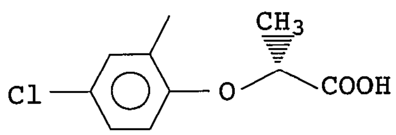

XXVII

Die Safener d) haben die folgenen Formeln XXXVI - XXXVII.

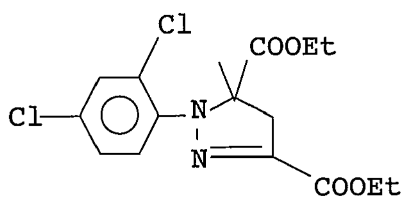

XXXVI

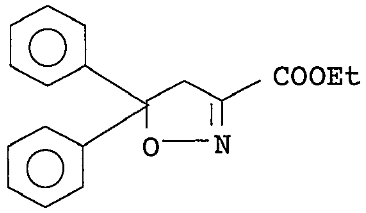

XXXVII

Gegenstand der vorliegenden Erfindung sind sowohl die genannten Herbizide als auch ihre landwirtschaftlich brauchbaren Salze. Insbesondere die Wirkstoffe Tritosulfuron, Florasulam, Flucarbazon, Propoxycarbazon, Sulfosulfuron, Mesotrione, Mesosulfuron-methyl, Iodosulfuron-methyl, Foramsulfuron, Flupyrsulfuron-methyl, Acifluorfen, Flufenpyr, 2,4-D, 2,4-DB, Dicamba, Dichlorprop-P, Fluroxypyr, MCPA und Mecoprop-P können gewünschtenfalls als Salze landwirtschaftlich brauchbarer Kationen Bestandteile der erfindungsgemäßen Mischungen sein. Landwirtschaftlich brauchbare Kationen sind beispielsweise Alkalimetallkationen wie Lithium, Natrium oder Kalium, Erdalkalimetallkationen wie beispielsweise Magnesium oder Calcium. In Betracht kommen aber auch organische Kationen wie beispielsweise Trimethylsulfonium, Tetramethylammonium, Tetraethylammonium, Tetrabutylammonium, Benzyltriethylammonium, Ethanolammonium oder Diethylethanolammonium. Methylammonium, Dimethylammonium, Trimethylammonium, Isopropylammonium, 2-(2-Hydroxyethoxy)ethylammonium.

Weiterhin Gegenstand der Erfindung sind die Alkylamide, Arylamide, Alkylester, Alkoxyalkylester und Alkylthioester derjenigen genannten Herbizide, die eine Carbonsäure-Funktion (-COOH) aufweisen, insbesondere der Wirkstoffe 2,4-D, 2,4-DB, Dicamba, Dichlorprop-P, Fluroxypyr, MCPA und Mecoprop-P.

Bevorzugte Alkylamide sind beispielsweise das Methyl- oder Dimethylamid. Bevorzugte Arylamide sind beispielsweise das Anilid oder das 2-Chloranilid. Bevorzugte Alkylester sind die geradkettigen oder verzweigten $C_1$-$C_{10}$-Alkylester, beispielsweise der Methyl-, Ethyl-, Propyl-, Isopropyl-, Butyl-, Isobutyl- oder Isooktylester. Bevorzugte Alkoxyalkylester sind die geradkettigen oder verzweigten $C_1$-$C_4$-Alkoxyethylester, beispielsweise der Methoxyethyl-, Ethoxyethyl- oder Butoxyethylester. Bevorzugte Alkylthioester sind die geradkettigen oder verzweigten $C_1$-$C_{10}$-Alkylthioester, beispielsweise der Ethylthioester.

Als herbizide Mischungen bevorzugt sind die nachfolgend genannten Mischungen; soweit die Wirkstoffe Tritosulfuron, Florasulam, Flucarbazon, Propoxycarbazon, Sulfosulfuron, Mesotrione, Mesosulfuron-methyl, Iodosulfuron-methyl, Foramsulfuron, Flupyrsulfuron-methyl, Acifluorfen, Flufenpyr, 2,4-D, 2,4-DB, Dicamba, Dichlorprop-P, Fluroxypyr, MCPA und/oder Mecoprop-P Bestandteile der Mischungen sind, sind außerdem auch diejenigen Mischungen bevorzugt, bei denen die genannten Wirkstoffe durch ihre Natrium-, Kalium- oder Calciumsalze ersetzt sind; des weiteren, soweit die Wirkstoffe 2,4-D, 2,4-DB, Dicamba, Dichlorprop-P, Fluroxypyr, MCPA und/oder Mecoprop-P Bestandteile der Mischungen sind, sind außerdem auch diejenigen Mischungen bevorzugt, bei denen die genannten Wirkstoffe durch ihre Ethanolammonium-, Diethanolammonium-, Methylammonium-, Dimethylammonium-, Trimethylammonium-, Isopropylammonium- oder 2-(2-Hydroxyethoxy)ethylammonium-Salze, ihre Methyl- oder Dimethylamide, ihre Anilide oder 2-Chloranilide, ihre Methyl-, Ethyl- Propyl-, Isopropyl-, Butyl-, Isobutyl-, Isooktyl-, Methoxyethyl-, Ethoxyethyl- oder Butoxyethylester oder ihre Ethylthioester ersetzt sind:

Tritosulfuron + Florasulam, Tritosulfuron + Flucarbazon, Tritosulfuron + Propoxycarbazon, Tritosulfuron + Sulfosulfuron, Tritosulfuron + Amicarbazone, Tritosulfuron + Pethoxamid, Tritosulfuron + Mesotrione, Tritosulfuron + Mesosulfuron-methyl, Tritosulfuron + Mesosulfuron-methyl + Mefenpyr-diethyl, Tritosulfuron + Mesosulfuron-methyl + Isoxadifen-ethyl, Tritosulfuron + Iodosulfuron-methyl, Tritosulfuron + Iodosulfuron-methyl + Mefenpyr-diethyl, Tritosulfuron + Iodosulfuron-methyl + Isoxadifen-ethyl, Tritosulfuron + Foramsulfuron, Tritosulfuron + Foramsulfuron + Mefenpyr-diethyl, Tritosulfuron + Foramsulfuron + Isoxadifen-ethyl, Tritosulfuron + Flupyrsulfuron-methyl, Tritosulfuron + Beflubutamid, Tritosulfuron + Carfentrazon-ethyl, Tritosulfuron + Fluazolat, Tritosulfuron + Pyraflufen-ethyl, Tritosulfuron + Florasulam + Acifluorfen, Tritosulfuron + Florasulam + Azafenidin, Tritosulfuron + Florasulam + Benzfendizon, Tritosulfuron + Florasulam + Butafenacil, Tritosulfuron + Florasulam + Cinidon-ethyl, Tritosulfuron + Florasulam + Flufenpyr, Tritosulfuron + Florasulam + Flufenpyr-ethyl, Tritosulfuron + Florasulam + Flumiclorac-pentyl, Tritosulfuron + Florasulam + Fluthiacet-methyl, Tritosulfuron + Florasulam + Oxyfluorfen, Tritosulfuron + Florasulam + Profluazol, Tritosulfuron + Florasulam + 2,4-D, Tritosulfuron + Florasulam + 2,4-DB, Tritosulfuron + Florasulam + Dicamba, Tritosulfuron + Florasulam + Dichlorprop-P, Tritosulfuron + Florasulam + Fluroxypyr, Tritosulfuron + Florasulam + Fluroxypyr-meptyl, Tritosulfuron + Florasulam + MCPA, Tritosulfuron + Florasulam + Mecoprop-P, Tritosulfuron + Flucarbazon + Acifluorfen, Tritosulfuron + Flucarbazon + Azafenidin, Tritosulfuron + Flucarbazon + Benzfendizon, Tritosulfuron + Flucarbazon + Butafenacil, Tritosulfuron + Flucarbazon + Cinidon-ethyl, Tritosulfuron + Flucarbazon + Flufenpyr, Tritosulfuron + Flucarbazon + Flufenpyr-ethyl, Tritosulfuron + Flucarbazon + Flumiclorac-pentyl, Tritosulfuron + Flucarbazon + Fluthiacet-methyl, Tritosulfuron + Flucarbazon + Oxyfluorfen, Tritosulfuron + Flucarbazon + Profluazol, Tritosulfuron + Flucarbazon

+ 2,4-D, Tritosulfuron + Flucarbazon + 2,4-DB, Tritosulfuron + Flucarbazon + Dicamba, Tritosulfuron + Flucarbazon + Dichlorprop-P, Tritosulfuron + Flucarbazon + Fluroxypyr, Tritosulfuron + Flucarbazon + Fluroxypyr-meptyl, Tritosulfuron + Flucarbazon + MCPA, Tritosulfuron + Flucarbazon + Mecoprop-P, Tritosulfuron + Propoxycarbazon + Acifluorfen, Tritosulfuron + Propoxycarbazon + Azafenidin, Tritosulfuron + Propoxycarbazon + Benzfendizon, Tritosulfuron + Propoxycarbazon + Butafenacil, Tritosulfuron + Propoxycarbazon + Cinidon-ethyl, Tritosulfuron + Propoxycarbazon + Flufenpyr, Tritosulfuron + Propoxycarbazon + Flufenpyr-ethyl, Tritosulfuron + Propoxycarbazon + Flumiclorac-pentyl, Tritosulfuron + Propoxycarbazon + Fluthiacet-methyl, Tritosulfuron + Propoxycarbazon + Oxyfluorfen, Tritosulfuron + Propoxycarbazon + Profluazol, Tritosulfuron + Propoxycarbazon + 2,4-D, Tritosulfuron + Propoxycarbazon + 2,4-DB, Tritosulfuron + Propoxycarbazon + Dicamba, Tritosulfuron + Propoxycarbazon + Dichlorprop-P, Tritosulfuron + Propoxycarbazon + Fluroxypyr, Tritosulfuron + Propoxycarbazon + Fluroxypyr-meptyl, Tritosulfuron + Propoxycarbazon + MCPA, Tritosulfuron + Propoxycarbazon + Mecoprop-P, Tritosulfuron + Sulfosulfuron + Acifluorfen, Tritosulfuron + Sulfosulfuron + Azafenidin, Tritosulfuron + Sulfosulfuron + Benzfendizon, Tritosulfuron + Sulfosulfuron + Butafenacil, Tritosulfuron + Sulfosulfuron + Cinidon-ethyl, Tritosulfuron + Sulfosulfuron + Flufenpyr, Tritosulfuron + Sulfosulfuron + Flufenpyr-ethyl, Tritosulfuron + Sulfosulfuron + Flumiclorac-pentyl, Tritosulfuron + Sulfosulfuron + Fluthiacet-methyl, Tritosulfuron + Sulfosulfuron + Oxyfluorfen, Tritosulfuron + Sulfosulfuron + Profluazol, Tritosulfuron + Sulfosulfuron + 2,4-D, Tritosulfuron + Sulfosulfuron + 2,4- DB, Tritosulfuron + Sulfosulfuron + Dicamba, Tritosulfuron + Sulfosulfuron + Dichlorprop-P, Tritosulfuron + Sulfosulfuron + Fluroxypyr, Tritosulfuron + Sulfosulfuron + Fluroxypyrmeptyl, Tritosulfuron + Sulfosulfuron + MCPA, Tritosulfuron + Sulfosulfuron + Mecoprop-P, Tritosulfuron + Amicarbazone + Acifluorfen, Tritosulfuron + Amicarbazone + Azafenidin, Tritosulfuron + Amicarbazone + Benzfendizon, Tritosulfuron + Amicarbazone + Butafenacil, Tritosulfuron + Amicarbazone + Cinidon-ethyl, Tritosulfuron + Amicarbazone + Flufenpyr, Tritosulfuron + Amicarbazone + Flufenpyr-ethyl, Tritosulfuron + Amicarbazone + Flumiclorac-pentyl, Tritosulfuron + Amicarbazone + Fluthiacet-methyl, Tritosulfuron + Amicarbazone + Oxyfluorfen, Tritosulfuron + Amicarbazone + Profluazol, Tritosulfuron + Amicarbazone + 2,4-D, Tritosulfuron + Amicarbazone + 2,4-DB, Tritosulfuron + Amicarbazone + Dicamba, Tritosulfuron + Amicarbazone + Dichlorprop-P, Tritosulfuron + Amicarbazone + Fluroxypyr, Tritosulfuron + Amicarbazone + Fluroxypyr-meptyl, Tritosulfuron + Amicarbazone + MCPA, Tritosulfuron + Amicarbazone + Mecoprop-P, Tritosulfuron + Pethoxamid + Acifluorfen, Tritosulfuron + Pethoxamid + Azafenidin, Tritosulfuron + Pethoxamid + Benzfendizon, Tritosulfuron + Pethoxamid + Butafenacil, Tritosulfuron + Pethoxamid + Cinidon-ethyl, Tritosulfuron + Pethoxamid + Flufenpyr, Tritosulfuron + Pethoxamid + Flufenpyr-ethyl, Tritosulfuron + Pethoxamid + Flumiclorac-pentyl, Tritosulfuron + Pethoxamid + Fluthiacet-methyl, Tritosulfuron + Pethoxamid + Oxyfluorfen, Tritosulfuron + Pethoxamid + Profluazol, Tritosulfuron + Pethoxamid + 2,4-D, Tritosulfuron + Pethoxamid + 2,4-DB, Tritosulfuron + Pethoxamid + Dicamba, Tritosulfuron + Pethoxamid + Dichlorprop-P, Tritosulfuron + Pethoxamid + Fluroxypyr, Tritosulfuron + Pethoxamid + Fluroxypyr-meptyl, Tritosulfuron + Pethoxamid + MCPA, Tritosulfuron + Pethoxamid + Mecoprop-P, Tritosulfuron + Mesotrione + Acifluorfen, Tritosulfuron + Mesotrione + Azafenidin, Tritosulfuron + Mesotrione + Benzfendizon, Tritosulfuron + Mesotrione + Butafenacil, Tritosulfuron + Mesotrione + Cinidon-ethyl, Tritosulfuron + Mesotrione + Flufenpyr, Tritosulfuron + Mesotrione + Flufenpyr-ethyl, Tritosulfuron + Mesotrione + Flumiclorac-pentyl, Tritosulfuron + Mesotrione + Fluthiacet-methyl, Tritosulfuron + Mesotrione + Oxyfluorfen, Tritosulfuron + Mesotrione + Profluazol, Tritosulfuron + Mesotrione + 2,4-D, Tritosulfuron + Mesotrione + 2,4-DB, Tritosulfuron + Mesotrione + Dicamba, Tritosulfuron + Mesotrione + Dichlorprop-P, Tritosulfuron + Mesotrione + Fluroxypyr, Tritosulfuron + Mesotrione + Fluroxypyr-meptyl, Tritosulfuron + Mesotrione + MCPA, Tritosulfuron + Mesotrione + Mecoprop-P, Tritosulfuron + Mesosulfuron-methyl + Acifluorfen, Tritosulfuron + Mesosulfuron-methyl + Azafenidin, Tritosulfuron + Mesosulfuron-methyl + Benzfendizon, Tritosulfuron + Mesosulfuron-methyl + Butafenacil, Tritosulfuron + Mesosulfuron-methyl + Cinidon-ethyl, Tritosulfuron + Mesosulfuron-methyl + Flufenpyr, Tritosulfuron + Mesosulfuron-methyl + Flufenpyr-ethyl, Tritosulfuron + Mesosulfuron-methyl + Flumiclorac-pentyl, Tritosulfuron + Mesosulfuron-methyl + Fluthiacet-methyl, Tritosulfuron + Mesosulfuron-methyl + Oxyfluorfen, Tritosulfuron + Mesosulfuron-methyl + Profluazol, Tritosulfuron + Mesosulfuron-methyl + 2,4-D, Tritosulfuron + Mesosulfuron-methyl + 2,4-DB, Tritosulfuron + Mesosulfuron-methyl + Dicamba, Tritosulfuron + Mesosulfuron-methyl + Dichlorprop-P, Tritosulfuron + Mesosulfuron-methyl + Fluroxypyr, Tritosulfuron + Mesosulfuron-methyl + Fluroxypyr-meptyl, Tritosulfuron + Mesosulfuron-methyl + MCPA, Tritosulfuron + Mesosulfuron-methyl + Mecoprop-P, Tritosulfuron + Mesosulfuron-methyl + Mefenpyr-diethyl + Acifluorfen, Tritosulfuron + Mesosulfuron-methyl + Mefenpyr-diethyl + Azafenidin, Tritosulfuron + Mesosulfuron-methyl + Mefenpyr-diethyl + Benzfendizon, Tritosulfuron + Mesosulfuron-methyl + Mefenpyr-diethyl + Butafenacil, Tritosulfuron + Mesosulfuron-methyl + Mefenpyr-diethyl + Cinidon-ethyl, Tritosulfuron + Mesosulfuron-methyl + Mefenpyr-diethyl + Flufenpyr, Tritosulfuron + Mesosulfuron-methyl + Mefenpyr-diethyl + Flufenpyr-ethyl, Tritosulfuron + Mesosulfuron-methyl + Mefenpyr-diethyl + Flumiclorac-pentyl, Tritosulfuron + Mesosulfuron-methyl + Mefenpyr-diethyl + Fluthiacet-methyl, Tritosulfuron + Mesosulfuron-methyl + Mefenpyr-diethyl + Oxyfluorfen, Tritosulfuron + Mesosulfuron-methyl + Mefenpyr-diethyl + Profluazol, Tritosulfuron + Mesosulfuron-methyl + Mefenpyr-diethyl + 2,4-D, Tritosulfuron + Mesosulfuron-methyl + Mefenpyr-diethyl + 2,4-DB, Tritosulfuron + Mesosulfuron-methyl + Mefenpyr-diethyl + Dicamba, Tritosulfuron + Mesosulfuron-methyl + Mefenpyr-diethyl + Dichlorprop-P, Tritosulfuron + Mesosulfuron-methyl + Mefenpyr-diethyl + Fluroxypyr, Tritosulfuron + Mesosulfuron-methyl + Mefenpyr-diethyl + Fluroxypyrmeptyl, Tritosulfuron + Mesosulfuron-methyl + Mefenpyr-diethyl + MCPA, Tritosulfuron + Mesosulfuron-methyl + Mefenpyr-diethyl + Mecoprop-P, Tritosulfuron + Mesosulfuron-methyl + Isoxadifen-ethyl + Acifluorfen, Tritosulfuron + Mesosulfuron-methyl + Isoxadifen-ethyl + Azafenidin, Tritosulfuron + Mesosulfuron-methyl + Isoxadifen-ethyl + Benzfendizon, Tritosulfuron + Mesosulfuron-methyl + Isoxadifen-ethyl + Butafenacil, Tritosulfuron + Mesosulfuron-methyl + Isoxadifen-ethyl + Cinidon-ethyl, Tritosulfuron + Mesosulfuron-methyl + Isoxadifen-ethyl + Flufenpyr, Tritosulfuron + Mesosulfuron-methyl + Isoxadifen-ethyl + Flufenpyr-ethyl, Tritosulfuron + Mesosulfuron-methyl + Isoxadifen-ethyl + Flumiclorac-pentyl, Tritosulfuron + Mesosulfuron-methyl + Isoxadifen-ethyl + Fluthiacet-methyl, Tritosulfuron + Mesosulfuron-methyl + Isoxadifen-ethyl + Oxyfluorfen, Tritosulfuron + Mesosulfuron-methyl + Isoxadifen-ethyl + Profluazol, Tritosulfuron + Mesosulfuron-methyl + Isoxadifen-ethyl + 2,4-D, Tritosulfuron + Mesosulfuron-methyl + Isoxadifen-ethyl + 2,4-DB, Tritosulfuron + Mesosulfuron-methyl + Isoxadifen-ethyl + Dicamba, Tritosulfuron + Mesosulfuron-methyl + Isoxadifen-ethyl + Dichlorprop-P, Tritosulfuron + Mesosulfuron-methyl + Isoxadifen-ethyl + Fluroxypyr, Tritosulfuron + Mesosulfuron-methyl + Isoxadifen-ethyl + Fluroxypyrmeptyl, Tritosulfuron + Mesosulfuron-methyl + Isoxadifen-ethyl + MCPA, Tritosulfuron + Mesosulfuron-methyl + Isoxadifen-ethyl + Mecoprop-P, Tritosulfuron + Iodosulfuron-methyl + Acifluorfen, Tritosulfuron + Iodosulfuron-methyl + Azafenidin, Tritosulfuron + Iodosulfuron-methyl + Benzfendizon, Tritosulfuron + Iodosulfuron-methyl + Butafenacil, Tritosulfuron + Iodosulfuron-methyl + Cinidon-ethyl, Tritosulfuron + Iodosulfuron-methyl + Flufenpyr, Tritosulfuron + Iodosulfuron-methyl + Flufenpyr-ethyl, Tritosulfuron + Iodosulfuron-methyl + Flumiclorac-pentyl, Tritosulfuron + Iodosulfuron-methyl + Fluthiacet-methyl, Tritosulfuron + Iodosulfuron-methyl + Oxyfluorfen, Tritosulfuron + Iodosulfuron-methyl + Profluazol, Tritosulfuron + Iodosulfuron-methyl + 2,4-D, Tritosulfuron + Iodosulfuron-methyl + 2,4-DB, Tritosulfuron + Iodosulfuron-methyl + Dicamba, Tritosulfuron + Iodosulfuron-methyl + Dichlorprop-P, Tritosulfuron + Iodosulfuron-methyl + Fluroxypyr, Tritosulfuron + Iodosulfuron-methyl + Fluroxypyr-meptyl, Tritosulfuron + Iodosulfuron-methyl + MCPA, Tritosulfuron + Iodosulfuron-methyl + Mecoprop-P, Tritosulfuron + Iodosulfuron-methyl + Mefenpyr-diethyl + Acifluorfen, Tritosulfuron + Iodosulfuron-methyl + Mefenpyr-diethyl + Azafenidin, Tritosulfuron + Iodosulfuron-methyl + Mefenpyr-diethyl + Benzfendizon, Tritosulfuron + Iodosulfuron-methyl + Mefenpyr-diethyl + Butafenacil, Tritosulfuron + Iodosulfuron-methyl + Mefenpyr-diethyl + Cinidon-ethyl, Tritosulfuron + Iodosulfuron-methyl + Mefenpyr-diethyl + Flufenpyr, Tritosulfuron + Iodosulfuron-methyl + Mefenpyr-diethyl + Flufenpyr-ethyl, Tritosulfuron + Iodosulfuron-methyl + Mefenpyr-diethyl + Flumiclorac-pentyl, Tritosulfuron + Iodosulfuron-methyl + Mefenpyr-diethyl + Fluthiacet-methyl, Tritosulfuron + Iodosulfuron-methyl + Mefenpyr-diethyl + Oxyfluorfen, Tritosulfuron + Iodosulfuron-methyl + Mefenpyr-diethyl + Profluazol, Tritosulfuron + Iodosulfuron-methyl + Mefenpyr-diethyl + 2,4-D, Tritosulfuron + Iodosulfuron-methyl + Mefenpyr-diethyl + 2,4-DB, Tritosulfuron + Iodosulfuron-methyl + Mefenpyr-diethyl + Dicamba, Tritosulfuron + Iodosulfuron-methyl + Mefenpyr-diethyl + Dichlorprop-P, Tritosulfuron + Iodosulfuron-methyl + Mefenpyr-diethyl + Fluroxypyr, Tritosulfuron + Iodosulfuron-methyl + Mefenpyr-diethyl + Fluroxypyr-meptyl, Tritosulfuron + Iodosulfuron-methyl + Mefenpyr-diethyl + MCPA, Tritosulfuron + Iodosulfuron-methyl + Mefenpyr-diethyl + Mecoprop-P, Tritosulfuron + Iodosulfuron-methyl + Isoxadifen-ethyl + Acifluorfen, Tritosulfuron + Iodosulfuron-methyl + Isoxadifen-ethyl + Azafenidin, Tritosulfuron + Iodosulfuron-methyl + Isoxadifen-ethyl + Benzfendizon, Tritosulfuron + Iodosulfuron-methyl + Isoxadifen-ethyl + Butafenacil, Tritosulfuron + Iodosulfuron-methyl + Isoxadifen-ethyl + Cinidon-ethyl, Tritosulfuron + Iodosulfuron-methyl + Isoxadifen-ethyl + Flufenpyr, Tritosulfuron + Iodosulfuron-methyl + Isoxadifen-ethyl + Flufenpyr-ethyl, Tritosulfuron + Iodosulfuron-methyl + Isoxadifen-ethyl + Flumiclorac-pentyl, Tritosulfuron + Iodosulfuron-methyl + Isoxadifen-ethyl + Fluthiacet-methyl, Tritosulfuron + Iodosulfuron-methyl + Isoxadifen-ethyl + Oxyfluorfen, Tritosulfuron + Iodosulfuron-methyl + Isoxadifen-ethyl + Profluazol, Tritosulfuron + Iodosulfuron-methyl + Isoxadifen-ethyl + 2,4-D, Tritosulfuron + Iodosulfuron-methyl + Isoxadifen-ethyl + 2,4-DB, Tritosulfuron + Iodosulfuron-methyl + Isoxadifen-ethyl + Dicamba, Tritosulfuron + Iodosulfuron-methyl + Isoxadifen-ethyl + Dichlorprop-P, Tritosulfuron + Iodosulfuron-methyl + Isoxadifen-ethyl + Fluroxypyr, Tritosulfuron + Iodosulfuron-methyl + Isoxadifen-ethyl + Fluroxypyr-meptyl, Tritosulfuron + Iodosulfuron-methyl + Isoxadifen-ethyl + MCPA, Tritosulfuron + Iodosulfuron-methyl + Isoxadifen-ethyl + Mecoprop-P, Tritosulfuron + Foramsulfuron + Acifluorfen, Tritosulfuron + Foramsulfuron + Azafenidin, Tritosulfuron + Foramsulfuron + Benzfendizon, Tritosulfuron + Foramsulfuron + Butafenacil, Tritosulfuron + Foramsulfuron + Cinidon-ethyl, Tritosulfuron + Foramsulfuron + Flufenpyr, Tritosulfuron + Foramsulfuron + Flufenpyr-ethyl, Tritosulfuron + Foramsulfuron + Flumiclorac-pentyl, Tritosulfuron + Foramsulfuron + Fluthiacet-methyl, Tritosulfuron + Foramsulfuron + Oxyfluorfen, Tritosulfuron + Foramsulfuron + Profluazol, Tritosulfuron + Foramsulfuron + 2,4-D, Tritosulfuron + Foramsulfuron + 2,4-DB, Tritosulfuron + Foramsulfuron + Dicamba, Tritosulfuron + Foramsulfuron + Dichlorprop-P, Tritosulfuron + Foramsulfuron + Fluroxypyr, Tritosulfuron + Foramsulfuron + Fluroxypyr-meptyl, Tritosulfuron + Foramsulfuron + MCPA, Tritosulfuron + Foramsulfuron + Mecoprop-P, Tritosulfuron + Foramsulfuron + Mefenpyr-diethyl + Acifluorfen, Tritosulfuron + Foramsulfuron + Mefenpyr-diethyl + Azafenidin, Tritosulfuron + Foramsulfuron + Mefenpyr-diethyl + Benzfendizon, Tritosulfuron + Foramsulfuron + Mefenpyr-diethyl + Butafenacil, Tritosulfuron + Foramsulfuron + Mefenpyr-diethyl + Cinidon-ethyl, Tritosulfuron + Foramsulfuron + Mefenpyr-diethyl + Flufenpyr, Tritosulfuron + Foramsulfuron + Mefenpyr-diethyl + Flufenpyr-ethyl, Tritosulfuron + Foramsulfuron + Mefenpyr-diethyl + Flumiclorac-pentyl, Tritosulfuron + Foramsulfuron + Mefenpyr-diethyl + Fluthiacet-methyl, Tritosulfuron + Foramsulfuron + Mefenpyr-diethyl + Oxyfluorfen, Tritosulfuron + Foramsulfuron + Mefenpyr-diethyl + Profluazol, Tritosulfuron + Foramsulfuron + Mefenpyr-diethyl + 2,4-D, Tritosulfuron + Foramsulfuron + Mefenpyr-diethyl + 2,4-DB, Tritosulfuron + Foramsulfuron + Mefenpyr-diethyl + Dicamba, Tritosulfuron + Foramsulfuron + Mefenpyr-diethyl + Dichlorprop-P, Tritosulfuron + Foramsulfuron + Mefenpyr-diethyl + Fluroxypyr,

Tritosulfuron + Foramsulfuron + Mefenpyr-diethyl + Fluroxypyrmeptyl, Tritosulfuron + Foramsulfuron + Mefenpyr-diethyl + MCPA, Tritosulfuron + Foramsulfuron + Mefenpyr-diethyl + Mecoprop-P, Tritosulfuron + Foramsulfuron + Isoxadifen-ethyl + Acifluorfen, Tritosulfuron + Foramsulfuron + Isoxadifen-ethyl + Azafenidin, Tritosulfuron + Foramsulfuron + Isoxadifen-ethyl + Benzfendizon, Tritosulfuron + Foramsulfuron + Isoxadifen-ethyl + Butafenacil, Tritosulfuron + Foramsulfuron + Isoxadifen-ethyl + Cinidon-ethyl, Tritosulfuron + Foramsulfuron + Isoxadifen-ethyl + Flufenpyr, Tritosulfuron + Foramsulfuron + Isoxadifen-ethyl + Flufenpyr-ethyl, Tritosulfuron + Foramsulfuron + Isoxadifen-ethyl + Flumiclorac-pentyl, Tritosulfuron + Foramsulfuron + Isoxadifen-ethyl + Fluthiacet-methyl, Tritosulfuron + Foramsulfuron + Isoxadifen-ethyl + Oxyfluorfen, Tritosulfuron + Foramsulfuron + Isoxadifen-ethyl + Profluazol, Tritosulfuron + Foramsulfuron + Isoxadifen-ethyl + 2,4-D, Tritosulfuron + Foramsulfuron + Isoxadifen-ethyl + 2,4-DB, Tritosulfuron + Foramsulfuron + Isoxadifen-ethyl + Dicamba, Tritosulfuron + Foramsulfuron + Isoxadifen-ethyl + Dichlorprop-P, Tritosulfuron + Foramsulfuron + Isoxadifen-ethyl + Fluroxypyr, Tritosulfuron + Foramsulfuron + Isoxadifen-ethyl + Fluroxypyr-meptyl, Tritosulfuron + Foramsulfuron + Isoxadifen-ethyl + MCPA, Tritosulfuron + Foramsulfuron + Isoxadifen-ethyl + Mecoprop-P, Tritosulfuron + Flupyrsulfuron-methyl + Acifluorfen, Tritosulfuron + Flupyrsulfuron-methyl + Azafenidin, Tritosulfuron + Flupyrsulfuron-methyl + Benzfendizon, Tritosulfuron + Flupyrsulfuron-methyl + Butafenacil, Tritosulfuron + Flupyrsulfuron-methyl + Cinidon-ethyl, Tritosulfuron + Flupyrsulfuron-methyl + Flufenpyr, Tritosulfuron + Flupyrsulfuron-methyl + Flufenpyr-ethyl, Tritosulfuron + Flupyrsulfuron-methyl + Flumiclorac-pentyl, Tritosulfuron + Flupyrsulfuron-methyl + Fluthiacet-methyl, Tritosulfuron + Flupyrsulfuron-methyl + Oxyfluorfen, Tritosulfuron + Flupyrsulfuron-methyl + Profluazol, Tritosulfuron + Flupyrsulfuron-methyl + 2,4-D, Tritosulfuron + Flupyrsulfuron-methyl + 2,4-DB, Tritosulfuron + Flupyrsulfuron-methyl + Dicamba, Tritosulfuron + Flupyrsulfuron-methyl + Dichlorprop-P, Tritosulfuron + Flupyrsulfuron-methyl + Fluroxypyr, Tritosulfuron + Flupyrsulfuron-methyl + Fluroxypyr-meptyl, Tritosulfuron + Flupyrsulfuron-methyl + MCPA, Tritosulfuron + Flupyrsulfuron-methyl + Mecoprop-P, Tritosulfuron + Beflubutamid + Acifluorfen, Tritosulfuron + Beflubutamid + Azafenidin, Tritosulfuron + Beflubutamid + Benzfendizon, Tritosulfuron + Beflubutamid + Butafenacil, Tritosulfuron + Beflubutamid + Cinidon-ethyl, Tritosulfuron + Beflubutamid + Flufenpyr, Tritosulfuron + Beflubutamid + Flufenpyr-ethyl, Tritosulfuron + Beflubutamid + Flumiclorac-pentyl, Tritosulfuron + Beflubutamid + Fluthiacet-methyl, Tritosulfuron + Beflubutamid + Oxyfluorfen, Tritosulfuron + Beflubutamid + Profluazol, Tritosulfuron + Beflubutamid + 2,4-D, Tritosulfuron + Beflubutamid + 2,4-DB, Tritosulfuron + Beflubutamid + Dicamba, Tritosulfuron + Beflubutamid + Dichlorprop-P, Tritosulfuron + Beflubutamid + Fluroxypyr, Tritosulfuron + Beflubutamid + Fluroxypyrmeptyl, Tritosulfuron + Beflubutamid + MCPA, Tritosulfuron + Beflubutamid + Mecoprop-P, Tritosulfuron + Carfentrazon-ethyl + Acifluorfen, Tritosulfuron + Carfentrazon-ethyl + Azafenidin, Tritosulfuron + Carfentrazon-ethyl + Benzfendizon, Tritosulfuron + Carfentrazon-ethyl + Butafenacil, Tritosulfuron + Carfentrazon-ethyl + Cinidon-ethyl, Tritosulfuron + Carfentrazon-ethyl + Flufenpyr, Tritosulfuron + Carfentrazon-ethyl + Flufenpyr-ethyl, Tritosulfuron + Carfentrazon-ethyl + Flumiclorac-pentyl, Tritosulfuron + Carfentrazon-ethyl + Fluthiacet-methyl, Tritosulfuron + Carfentrazon-ethyl + Oxyfluorfen, Tritosulfuron + Carfentrazon-ethyl + Profluazol, Tritosulfuron + Carfentrazon-ethyl + 2,4-D, Tritosulfuron + Carfentrazon-ethyl + 2,4-DB, Tritosulfuron + Carfentrazon-ethyl + Dicamba, Tritosulfuron + Carfentrazon-ethyl + Dichlorprop-P, Tritosulfuron + Carfentrazon-ethyl + Fluroxypyr, Tritosulfuron + Carfentrazon-ethyl + Fluroxypyr-meptyl, Tritosulfuron + Carfentrazon-ethyl + MCPA, Tritosulfuron + Carfentrazon-ethyl + Mecoprop-P, Tritosulfuron + Fluazolat + Acifluorfen, Tritosulfuron + Fluazolat + Azafenidin, Tritosulfuron + Fluazolat + Benzfendizon, Tritosulfuron + Fluazolat + Butafenacil, Tritosulfuron + Fluazolat + Cinidon-ethyl, Tritosulfuron + Fluazolat + Flufenpyr, Tritosulfuron + Fluazolat + Flufenpyr-ethyl, Tritosulfuron + Fluazolat + Flumiclorac-pentyl, Tritosulfuron + Fluazolat + Fluthiacet-methyl, Tritosulfuron + Fluazolat + Oxyfluorfen, Tritosulfuron + Fluazolat + Profluazol, Tritosulfuron + Fluazolat + 2,4-D, Tritosulfuron + Fluazolat + 2,4-DB, Tritosulfuron + Fluazolat + Dicamba, Tritosulfuron + Fluazolat + Dichlorprop-P, Tritosulfuron + Fluazolat + Fluroxypyr, Tritosulfuron + Fluazolat + Fluroxypyr-meptyl, Tritosulfuron + Fluazolat + MCPA, Tritosulfuron + Fluazolat + Mecoprop-P, Tritosulfuron + Pyraflufen-ethyl + Acifluorfen, Tritosulfuron + Pyraflufen-ethyl + Azafenidin, Tritosulfuron + Pyraflufen-ethyl + Benzfendizon, Tritosulfuron + Pyraflufen-ethyl + Butafenacil, Tritosulfuron + Pyraflufen-ethyl + Cinidon-ethyl, Tritosulfuron + Pyraflufen-ethyl + Flufenpyr, Tritosulfuron + Pyraflufen-ethyl + Flufenpyr-ethyl, Tritosulfuron + Pyraflufen-ethyl + Flumiclorac-pentyl, Tritosulfuron + Pyraflufen-ethyl + Fluthiacet-methyl, Tritosulfuron + Pyraflufen-ethyl + Oxyfluorfen, Tritosulfuron + Pyraflufen-ethyl + Profluazol, Tritosulfuron + Pyraflufen-ethyl + 2,4-D, Tritosulfuron + Pyraflufen-ethyl + 2,4-DB, Tritosulfuron + Pyraflufen-ethyl + Dicamba, Tritosulfuron + Pyraflufen-ethyl + Dichlorprop-P, Tritosulfuron + Pyraflufen-ethyl + Fluroxypyr, Tritosulfuron + Pyraflufen-ethyl + Fluroxypyr-meptyl, Tritosulfuron + Pyraflufen-ethyl + MCPA, Tritosulfuron + Pyraflufen-ethyl + Mecoprop-P.

Als herbizide Mischungen besonders bevorzugt sind die nachfolgend genannten Mischungen; soweit die Wirkstoffe Tritosulfuron, Flucarbazon, Propoxycarbazon, Dicamba, Mesosulfuron-methyl, Iodosulfuron-methyl, Foramsulfuron und/oder Flupyrsulfuron-methyl Bestandteile der Mischungen sind, sind außerdem auch diejenigen Mischungen bevorzugt, bei denen die genannten Wirkstoffe durch ihre Natrium-, Kalium- oder Calciumsalze ersetzt sind; des weiteren, soweit Dicamba Bestandteil der Mischungen ist, sind außerdem auch diejenigen Mischungen bevorzugt, bei denen Dicamba durch sein Ethanolammonium-, Diethanolammonium-, Methylammonium-, Dimethylammonium-, Trimethylammonium-, Isopropylammonium- oder 2-(2-Hydroxyethoxy)ethylammonium-Salz ersetzt ist:

Tritosulfuron + Flucarbazon, Tritosulfuron + Flucarbazon + Dicamba, Tritosulfuron + Propoxycarbazon, Tritosulfuron + Propoxycarbazon + Cinidon-ethyl, Tritosulfuron + Propoxycarbazon + Dicamba, Tritosulfuron + Mesosulfuron-methyl, Tritosulfuron + Mesosulfuron-methyl + Dicamba, Tritosulfuron + Mesosulfuron-methyl + Mefenpyr-diethyl, Tritosulfuron + Mesosulfuron-methyl + Isoxadifen-ethyl, Tritosulfuron + Mesosulfuron-methyl + Dicamba + Mefenpyr-diethyl, Tritosulfuron + Mesosulfuron-methyl + Dicamba + Isoxadifen-ethyl, Tritosulfuron + Iodosulfuron-methyl, Tritosulfuron + Iodosulfuron-methyl + Mefenpyr-diethyl, Tritosulfuron + Iodosulfuron-methyl + Isoxadifen-ethyl, Tritosulfuron + Iodosulfuron-methyl + Dicamba, Tritosulfuron + Iodosulfuron-methyl + Dicamba + Mefenpyr-diethyl, Tritosulfuron + Iodosulfuron-methyl + Dicamba + Isoxadifen-ethyl, Tritosulfuron + Foramsulfuron, Tritosulfuron + Foramsulfuron + Mefenpyr-diethyl, Tritosulfuron + Foramsulfuron + Isoxadifen-ethyl, Tritosulfuron + Foramsulfuron+ Dicamba, Tritosulfuron + Foramsulfuron + Dicamba + Mefenpyr-diethyl, Tritosulfuron + Foramsulfuron + Dicamba + Isoxadifen-ethyl, Tritosulfuron + Flupyrsulfuron-methyl, Tritosulfuron + Flupyrsulfuron-methyl + Dicamba.

Eine ganz besonders bevorzugte herbizide Mischung ist die von Tritosulfuron oder dessen Natrium-, Kalium- oder Calciumsalz und Flucarbazon oder dessen Natrium-, Kalium- oder Calciumsalz.

Eine weitere ganz besonders bevorzugte herbizide Mischung ist die von Tritosulfuron oder dessen Natrium-, Kalium- oder Calciumsalz und Flucarbazon oder dessen Natrium-, Kalium- oder Calciumsalz und Dicamba.

Eine weitere ganz besonders bevorzugte herbizide Mischung ist die von Tritosulfuron oder dessen Natrium-, Kalium- oder Calciumsalz und Propoxycarbazon oder dessen Natrium-, Kalium- oder Calciumsalz.

Eine weitere ganz besonders bevorzugte herbizide Mischung ist die von Tritosulfuron oder dessen Natrium-, Kalium- oder Calciumsalz und Propoxycarbazon oder dessen Natrium-, Kalium- oder Calciumsalz und Cinidon-ethyl.

Eine weitere ganz besonders bevorzugte herbizide Mischung ist die von Tritosulfuron oder dessen Natrium-, Kalium- oder Calciumsalz und Propoxycarbazon oder dessen Natrium-, Kalium- oder Calciumsalz und Dicamba.

Eine weitere ganz besonders bevorzugte herbizide Mischung ist die von Tritosulfuron oder dessen Natrium-, Kalium- oder Calciumsalz und Mesosulfuron-methyl oder dessen Natrium-, Kalium- oder Calciumsalz.

Eine weitere ganz besonders bevorzugte herbizide Mischung ist die von Tritosulfuron oder dessen Natrium-, Kalium- oder Calciumsalz und Mesosulfuron-methyl oder dessen Natrium-, Kalium- oder Calciumsalz und Dicamba.

Eine weitere ganz besonders bevorzugte herbizide Mischung ist die von Tritosulfuron oder dessen Natrium-, Kalium- oder Calciumsalz und Mesosulfuron-methyl oder dessen Natrium-, Kalium- oder Calciumsalz und Mefenpyr-diethyl.

Eine weitere ganz besonders bevorzugte herbizide Mischung ist die von Tritosulfuron oder dessen Natrium-, Kalium- oder Calciumsalz und Mesosulfuron-methyl oder dessen Natrium-, Kalium- oder Calciumsalz und Isoxadifen-ethyl.

Eine weitere ganz besonders bevorzugte herbizide Mischung ist die von Tritosulfuron oder dessen Natrium-, Kalium- oder Calciumsalz und Mesosulfuron-methyl oder dessen Natrium-, Kalium- oder Calciumsalz, Dicamba und Mefenpyr-diethyl.

Eine weitere ganz besonders bevorzugte herbizide Mischung ist die von Tritosulfuron oder dessen Natrium-, Kalium- oder Calciumsalz und Mesosulfuron-methyl oder dessen Natrium-, Kalium- oder Calciumsalz, Dicamba und Isoxadifen-ethyl.

Eine weitere ganz besonders bevorzugte herbizide Mischung ist die von Tritosulfuron oder dessen Natrium-, Kalium- oder Calciumsalz und Iodosulfuron-methyl oder dessen Natrium-, Kalium- oder Calciumsalz.

Eine weitere ganz besonders bevorzugte herbizide Mischung ist die von Tritosulfuron oder dessen Natrium-, Kalium- oder Calciumsalz und Iodosulfuron-methyl oder dessen Natrium-, Kalium- oder Calciumsalz und Dicamba.

Eine weitere ganz besonders bevorzugte herbizide Mischung ist die von Tritosulfuron oder dessen Natrium-, Kalium- oder Calciumsalz und Iodosulfuron-methyl oder dessen Natrium-, Kalium- oder Calciumsalz und Mefenpyr-diethyl.

Eine weitere ganz besonders bevorzugte herbizide Mischung ist die von Tritosulfuron oder dessen Natrium-, Kalium- oder Calciumsalz und Iodosulfuron-methyl oder dessen Natrium-, Kalium- oder Calciumsalz und Isoxadifen-ethyl.

Eine weitere ganz besonders bevorzugte herbizide Mischung ist die von Tritosulfuron oder dessen Natrium-, Kalium- oder Calciumsalz und Iodosulfuron-methyl oder dessen Natrium-, Kalium- oder Calciumsalz, Dicamba und Mefenpyr-diethyl.

Eine weitere ganz besonders bevorzugte herbizide Mischung ist die von Tritosulfuron oder dessen Natrium-, Kalium- oder Calciumsalz und Iodosulfuron-methyl oder dessen Natrium-, Kalium- oder Calciumsalz, Dicamba und Isoxadifen-ethyl.

Eine weitere ganz besonders bevorzugte herbizide Mischung ist die von Tritosulfuron oder dessen Natrium-, Kalium- oder Calciumsalz und Foramsulfuron-methyl oder dessen Natrium-, Kalium- oder Calciumsalz.

Eine weitere ganz besonders bevorzugte herbizide Mischung ist die von Tritosulfuron oder dessen Natrium-, Kalium- oder Calciumsalz und Foramsulfuron-methyl oder dessen Natrium-, Kalium- oder Calciumsalz und Dicamba.

Eine weitere ganz besonders bevorzugte herbizide Mischung ist die von Tritosulfuron oder dessen Natrium-, Kalium- oder Calciumsalz und Foramsulfuron-methyl oder dessen Natrium-, Kalium- oder Calciumsalz und Mefenpyr-diethyl.

Eine weitere ganz besonders bevorzugte herbizide Mischung ist die von Tritosulfuron oder dessen Natrium-, Kalium- oder Calciumsalz und Foramsulfuron-methyl oder dessen Natrium-, Kalium- oder Calciumsalz und Isoxadifen-ethyl.

Eine weitere ganz besonders bevorzugte herbizide Mischung ist die von Tritosulfuron oder dessen Natrium-, Kalium- oder Calciumsalz und Foramsulfuron-methyl oder dessen Natrium-, Kalium- oder Calciumsalz, Dicamba und Mefenpyr-diethyl.

Eine weitere ganz besonders bevorzugte herbizide Mischung ist die von Tritosulfuron oder dessen Natrium-, Kalium- oder Calciumsalz und Foramsulfuron-methyl oder dessen Natrium-, Kalium- oder Calciumsalz, Dicamba und Isoxadifen-ethyl.

Eine weitere ganz besonders bevorzugte herbizide Mischung ist die von Tritosulfuron oder dessen Natrium-, Kalium- oder Calciumsalz und Flupyrsulfuron-methyl oder dessen Natrium-, Kalium- oder Calciumsalz.

Eine weitere ganz besonders bevorzugte herbizide Mischung ist die von Tritosulfuron oder dessen Natrium-, Kalium- oder Calciumsalz und Flupyrsulfuron-methyl oder dessen Natrium-, Kalium- oder Calciumsalz und Dicamba.

Die Mischungsverhältnisse der Komponenten a) zu b) liegen bei einem Gewichtsverhältnis von 1:0,1 bis 1:10, bevorzugt 1:0,2 bis 1:5 und besonders bevorzugt von 1:0,5 bis 1:1, besonders bevorzugt von 1: 0,3 bis 1:3.

Werden die Komponenten c) oder d) mitverwendet, liegen die Mischungsverhältnisse der Komponenten a) zu b) zu c) zu d) bei einem Gewichtsverhältnis von 1:0,1:0,1:0,1 bis 1:10:10:10, bevorzugt 1:0,2:0,2:0,2 bis 1:5:5:5, besonders bevorzugt 1:0,3:0,3:0,3 bis 1:3:3:3.

In der anwendungsfertigen Zubereitung können die Komponenten a) bis d) in suspendierter, emulgierter oder gelöster Form gemeinsam oder getrennt formuliert vorliegen. Die Anwendungsformen richten sich ganz nach den Verwendungszwecken.

Die erfindungsgemäßen Mittel können beispielsweise in Form von direkt versprühbaren wäßrigen Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungsformen richten sich nach den Verwendungszwecken; sie sollten in jedem Fall möglichst die feinste Verteilung der Wirkstoffe gewährleisten.

Die herbiziden Mittel enthalten die Komponenten a) und b) sowie gegebenenfalls c)und d) und für die Formulierung von Pflanzenschutzmitteln übliche Hilfsstoffe.

Als inerte Hilfsstoffe kommen im Wesentlichen in Betracht:

Mineralölfraktionen von mittlerem bis hohem Siedepunkt wie Kerosin und Dieselöl, ferner Kohlenteeröle sowie Öle pflanzlichen oder tierischen Ursprungs, aliphatische, cyclische und aromatische Kohlenwasserstoffe, z.B. Paraffine, Tetrahydronaphthalin, alkylierte Naphthaline und deren Derivate, alkylierte Benzole und deren Derivate, Alkohole wie Methanol, Ethanol, Propanol, Butanol und Cyclohexanol, Ketone wie Cyclohexanon, stark polare Lösungsmittel, z.B. Amine wie N-Methylpyrrolidon und Wasser.

Wäßrige Anwendungsformen können aus Emulsionskonzentraten, Suspensionen, Pasten, netzbaren Pulvern oder wasserdispergierbaren Granulaten durch Zusatz von Wasser bereitet werden. Zur Herstellung von Emulsionen, Pasten oder Öldispersionen können die Wirkstoffe a) bis d) als solche oder in einem Öl oder Lösungsmittel gelöst, mittels Netz-, Haft-, Dispergier- oder Emulgiermittel in Wasser homogenisiert werden. Es können aber auch aus wirksamer Substanz, Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanolen sowie von Fettalkoholglykolether, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether oder Polyoxypropylenalkylether, Laurylalkoholpolyglykoletheracetat, Sorbitester, Lignin-Sulfitablaugen oder Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate können durch Bindung der Wirkstoffe an feste Trägerstoffe hergestellt werden. Feste Trägerstoffe sind Mineralerden wie Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Konzentrationen der Wirkstoffe in den anwendungsfertigen Zubereitungen können in weiten Bereichen

variiert werden. Die Formulierungen enthalten im allgemeinen etwa von 0,001 bis 98 Gew.-%, vorzugsweise 0,01 bis 95 Gew.-%, an Wirkstoffen.

Die Wirkstoffe werden dabei in einer Reinheit von 90 % bis 100 %, vorzugsweise 95 % bis 100 % (nach NMR-Spektrum) eingesetzt.

Die Komponenten a) und b) mit ggf. c) und d) können gemeinsam oder getrennt, zur gleichen Zeit oder nacheinander, vor, während oder nach dem Auflaufen der Pflanzen ausgebracht werden.

Sind die Wirkstoffe a) bis b) und ggf. c) und d) für gewisse Kulturpflanzen weniger verträglich, so können Ausbringungstechniken angewandt werden, bei welchen die herbiziden Mittel mit Hilfe der Spritzgeräte so gespritzt werden, daß die Blätter der empfindlichen Kulturpflanzen nach Möglichkeit nicht getroffen werden, während die Wirkstoffe auf die Blätter darunter wachsender unerwünschter Pflanzen oder die unbedeckte Bodenfläche gelangen (post-directed, lay-by).

Die erforderliche Aufwandmenge an reiner Wirkstoffmischung, d.h. a) und b) sowie ggf. c) und d) ohne Formulierungshilfsmittel, ist abhängig von der Zusammensetzung des Pflanzenbestandes, vom Entwicklungsstadium der Pflanzen, von den klimatischen Verhältnissen am Einsatzort sowie von der Anwendungstechnik. Im allgemeinen beträgt die Aufwandmenge von a) + b) 0,001 bis 3 kg/ha, vorzugsweise 0,01 bis 1 kg/ha aktive Substanz (a.S.).

Die Mittel werden den Pflanzen vornehmlich durch Blattspritzung zugeführt. Dabei kann die Ausbringung z.B. mit Wasser als Trägerstoff durch übliche Spritztechniken mit Spritzbrühe-Mengen von etwa 100 bis 1000 1/ha erfolgen. Eine Anwendung der herbiziden Mittel im sogenannten "Low Volume"- und "Ultra-low-Volume"-Verfahren ist ebenso möglich wie ihre Applikation in Form von sogenannten Mikrogranulaten.

Außerdem kann es von Nutzen sein, die erfindungsgemäßen Mittel auch noch mit weiteren Pflanzenschutzmitteln gemischt, gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralsalzlösungen, welche zur Behebung von Ernährungs- und Spurenelementmängeln eingesetzt werden. Es können auch nichtphytotoxische Öle und Ölkonzentrate zugesetzt werden.

Die erfindungsgemäßen Mischungen können auch in Kulturpflanzen zur Anwendung gebracht werden, die durch gentechnische oder züchterische Methoden gegen Herbizide und/oder Schädlinge und/oder phytopathogene Pilze bzw. Bakterien resistent gemacht worden sind. In Betracht kommen hier vorzugsweise gentechnisch veränderte Getreide- und Maispflanzen, insbesondere Maispflanzen, die gegen herbizide PPO-Inhibitoren, wie beispielsweise Acifluorfen, Azafenidin, Benzfendizon, Butafenacil, Carfentrazon-ethyl, Cinidon-ethyl, Fluazolat, Flufenpyr, Flufenpyr-ethyl, Flumiclorac-pentyl, Fluthiacet-methyl, Oxyfluorfen, Profluazol oder Pyraflufen-ethyl resistent sind, oder Maispflanzen, die durch die gentechnische Einführung des Bt-Toxins resistent gegen den Befall durch bestimmte Insekten sind oder Getreide- oder Maispflanzen, die gegen herbizide EPSP-Synthase-Inhibitoren, wie z. B. Glyphosate oder Sulfosate, oder gegen herbizide ALS-Inhibitoren, wie z. B. Imazapic, Imazamethabenz-methyl, Imazamox, Imazapyr, Imazaquin oder Imazethapyr, resistent sind.

Anwendungsbeispiele

Der Einfluß der erfindungsgemäßen herbiziden Mischungen aus den Komponenten a) und b) und ggf. c) und d) auf das Wachstum von unerwünschten Planzen im Vergleich zu den herbiziden Wirkstoffen allein ließ sich durch die folgenden Gewächshausversuche belegen:

Für die Nachauflaufbehandlung wurden die Testpflanzen je nach Wuchsform erst bis zu einer Wuchshöhe von 3 bis 20 cm angezüchtet und erst dann behandelt. Die herbiziden Mittel wurden hierbei in Wasser als Verteilungsmittel suspendiert oder emulgiert und mittels fein verteilender Düsen gespritzt.

Tritosulfuron wurde als Emulsionskonzentrat formuliert und unter Zugabe von derjenigen Menge an Lösungsmittelsystem in die Spritzbrühe eingesetzt, mit welcher der Wirkstoff in den Tabellen angegebenen Aufwandmengen ausgebracht wurde.

Die jeweils angegebene Komponente b) sowie ggf. c) und/oder d) und/oder e) wurde als 10 gew.-%iges Emulsionskonzentrat formuliert und unter Zugabe von derjenigen Menge an Lösungsmittelsystem in die Spritzbrühe eingesetzt, mit welcher der Wirkstoff in den Tabellen angegebenen Aufwandmengen ausgebracht wurde.

Die Versuchsperiode erstreckte sich über 20-22 Tage. Während dieser Zeit wurden die Pflanzen gepflegt, wobei ihre Reaktionen auf die Wirkstoff-Behandlungen erfaßt wurden.

Bewertet wurde die Schädigung durch die chemischen Mittel anhand einer Skala von 0 bis 100 % im Vergleich zu den unbehandelten Kontrollpflanzen. Dabei bedeutet 0 keine Schädigung und 100 eine völlige Zerstörung der Pflanzen.

Bei den folgenden Beispielen wurde nach der Methode von S. R. Colby (1967) "Calculating synergistic and antagonistic responses of herbicide combinations", Weeds 15, S. 22ff. derjenige Wert E errechnet, der bei einer nur additiven Wirkung der Einzelwirkstoffe zu erwarten ist.

$$E = X + Y - (XY/100)$$

wobei

X = Prozentsatz Wirkung mit Präparat A bei einer Aufwandmenge a;
Y = Prozentsatz Wirkung mit Präparat B bei einer Aufwandmenge b;
E = zu erwartende Wirkung (in %) durch A + B bei Aufwandmengen a + b

bedeuten.

Ist der gemessene Wert höher als der nach Colby errechnete Wert E, so liegt eine synergistische Wirkung vor.

Beispiel 1

Synergistische herbizide Wirkung der Mischung von Tritosulfuron und Propoxycarbazon-Natriumsalz auf Alopecurus myosuroides (Ackerfuchsschwanzgras)

| Aufwandmenge | | Herbizide Wirkung | | | |
|---|---|---|---|---|---|
| Komponente A Tritosulfuron | Komponente B1 Propoxy-carbazon-Natriumsalz | Gemessen | | Nach Colby berechnet | Gemessen |
| | | Komponente A alleine | Komponente B1 alleine | E | Mischung von A und B1 |
| 125 g/ha | 7,81 g/ha | 41 | 55 | 73 | 81 |

Beispiel 2

Synergistische herbizide Wirkung der Mischung von Tritosulfuron und Propoxycarbazon-Natriumsalz auf Apera spica-venti (gemeiner Windhalm)

| Aufwandmenge | | Herbizide Wirkung | | | |
|---|---|---|---|---|---|
| Komponente A Tritosulfuron | Komponente B1 Propoxy-carbazon-Natriumsalz | Gemessen | Nach Colby berechnet | Gemessen | |
| | | Komponente A alleine | Komponente B1 alleine | E | Mischung von A und B1 |
| 15,63 g/ha | 15,63 g/ha | 0 | 73 | 73 | 85 |

Beispiel 3

Synergistische herbizide Wirkung der Mischung von Tritosulfuron und Flucarbazon-Natriumsalz auf Lolium multiflorum (welsches Weidelgras)

| Aufwandmenge | | Herbizide Wirkung | | | |
|---|---|---|---|---|---|
| Komponente A Tritosulfuron | Komponente B2 Flucarbazon-Natriumsalz | Gemessen | | Nach Colby berechnet | Gemessen |
| | | Komponente A alleine | Komponente B2 alleine | E | Mischung von A und B2 |
| 15,63 g/ha | 15,63 g/ha | 0 | 71 | 71 | 79 |
| 7,81 g/ha | 7,81 g/ha | 0 | 33 | 33 | 50 |

Beispiel 4

Synergistische herbizide Wirkung der Mischung von Tritosulfuron und Sulfosulfuron auf Lolium multiflorum (welsches Weidelgras)

| Aufwandmenge | | Herbizide Wirkung | | | |
|---|---|---|---|---|---|
| Komponente A Tritosulfuron | Komponente B3 Sulfosulfuron | Gemessen | | Nach Colby berechnet | Gemessen |
| | | Komponente A alleine | Komponente B3 alleine | E | Mischung von A und B3 |
| 62,5 g/ha | 15,63 g/ha | 48 | 43 | 70 | 80 |

## Patentansprüche

**1.** Herbizide Mischung, enthaltend

a) Tritosulfuron der Formel I oder ein landwirtschaftlich brauchbares Salz davon

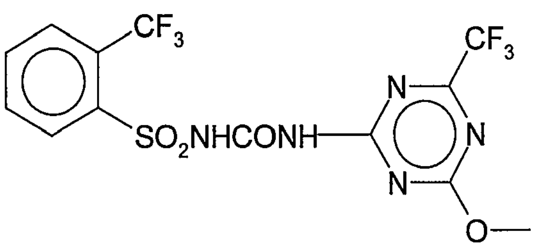

I

b) Sulfosulfuron der Formel V, oder dessen landwirtschaftlich brauchbaren Salze

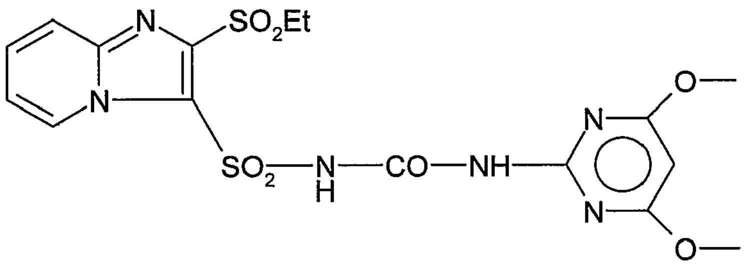

V

2. Herbizide Mischung nach Anspruch 1, weiterhin enthaltend ein Herbizid c), ausgewählt aus der Gruppe bestehend aus Acifluorfen, Azafenidin, Benzfendizon, Butafenacil, Cinidon-ethyl, Flufenpyr, Flufenpyr-ethyl, Flumiclorac-pentyl, Fluthiacet-methyl, Oxyfluorfen, Profluazol, 2,4-D, 2,4-DB, Dicamba, Dichlorprop-P, Fluroxypyr, Fluroxypyr-meptyl, MCPA und Mecoprop-P.

3. Herbizide Mischung nach einem der Ansprüche 1 oder 2, weiterhin enthaltend einen Safener d), ausgewählt aus der Gruppe bestehend aus Mefenpyr-diethyl der Formel XXXVI und Isoxadifen-ethyl der Formel XXXVII

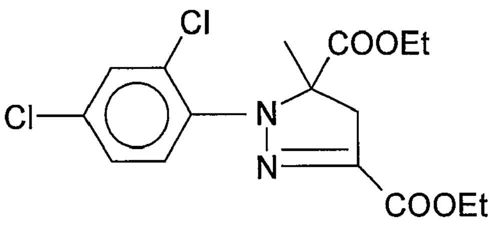

XXXVI

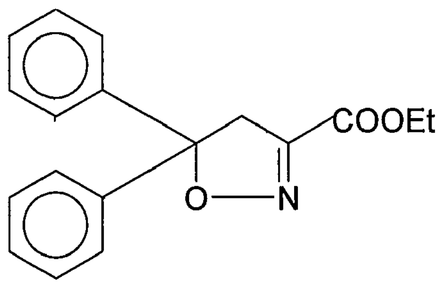

XXXVII

4. Herbizide Mischung nach einem der Ansprüche 1 bis 3, weiterhin enthaltend mindestens einen flüssigen oder festen Trägerstoff.

5. Herbizide Mischung nach einem der Ansprüche 1 bis 4, weiterhin enthaltend mindestens einen oberflächenaktiven Stoff.

6. Verfahren zur Bekämpfung von unerwünschtem Pflanzenwuchs, **dadurch gekennzeichnet, daß** man eine herbizid wirksame Menge einer Mischung gemäß einem der Ansprüche 1 bis 5 auf Pflanzen, deren Lebensraum oder Saatgut einwirken läßt.

7. Verfahren zur Bekämpfung von unerwünschtem Pflanzenwuchs, **dadurch gekennzeichnet, daß** man die herbizide Mischung gemäß einem der Ansprüche 1 bis 5 gleichzeitig oder nacheinander, vor, während oder nach dem Auflaufen der unerwünschten Pflanzen ausbringt.

8. Verfahren zur Bekämpfung von unerwünschtem Pflanzenwuchs, **dadurch gekennzeichnet, daß** die Blätter der unerwünschten Pflanzen gleichzeitig oder nacheinander mit der herbiziden Mischung gemäß einem der Ansprüche 1 bis 5 behandelt werden.

**9.** Verwendung der herbiziden Mischungen gemäß einem der Ansprüche 1 bis 5 zur Bekämpfung von unerwünschtem Pflanzenwuchs.

**10.** Verwendung der herbiziden Mischungen gemäß einem der Ansprüche 1 bis 5 zur Bekämpfung von unerwünschtem Pflanzenwuchs in Getreidekulturen.

**11.** Verwendung der herbiziden Mischungen gemäß einem der Ansprüche 1 bis 5 zur Bekämpfung von unerwünschtem Pflanzenwuchs in Maiskulturen.

Europäisches Patentamt

## ERKLÄRUNG

die nach Regel 45 des Europäischen Patentübereinkommens für das weitere Verfahren als europäischer Recherchenbericht gilt

Nummer der Anmeldung: EP 07 10 9418

| Die Recherchenabteilung ist der Auffassung, daß die vorliegende Patentanmeldung den Vorschriften des EPÜ in einem solchen Umfang nicht entspricht, daß sinnvolle Ermittlungen über den Stand der Technik auf der Grundlage aller Patentansprüche nicht möglich sind. | KLASSIFIKATION DER ANMELDUNG (IPC) |
|---|---|
| Grund: | INV. A01P13/00 A01N47/36 |

Es wird keine Recherche durchgeführt, da zum Einen die vorliegende Erfindung bereits recherchiert und geprüft wurde und zum Anderen die vorliegende Anmeldung in der Prüfungsphase zwangsläufig unter Art.76(1) EPÜ zurrückgewiesen werden soll (Siehe Richtlinien C-VI,9.1.4).
In einer Hauptanmeldung (H) PCT/EP/2001/009999 wurde ein Nichteinheitlichkeitseinwand über 15 Erfindungen erhoben. Recherchiert wurden Erfindungen 1-4. Diese Anmeldung H wurde mit der Erfindung 4 im PCT Kapitel 2 zur Prüfung vorgelegt. Weiterhin, ist H in die Europäische Phase eingetreten, wobei der Sachverhalt auf Erfindung 1 eingeschränkt wurde. Ein Patent wurde auf dieser Basis erteilt (24.05.2006, Patentblatt 2006/21).
Der Sachverhalt der vorliegenden Teilanmeldung (T2) ist in H enthalten (T2 entspricht der damals recherchierten und geprüften Erfindung 4), jedoch wurde T2 am 01.06.2007 beim Europäischen Patentamt eingereicht, also nach Erteilung von H. Daher ist T2 keine gültige Teilanmeldung von H im Sinne von Art.76(1) EPÜ.
Am 16.02.2006 wurde eine Teilanmeldung (T1) von H rechtzeitig mit der Nummer 06110045.9 eingereicht, die auf Erfindung 9 von Anfang an eingeschränkt war. T1 ist zur Zeit des Einreichen von T2 noch inder Prüfungsphase. Jedoch ist der Sachverhalt von T2 nicht in T1 enthalten.
Sulfosulfuron ist in T1 nur im Umriss des Standes der Technik erwähnt und keinesfalls in synergistischen Herbizimischungen worauf sich die vorliegende T2 bezieht. Daher ist T2 keine gültige Teilanmeldung von T1 im Sinne von

-/--

1

| Recherchenort | Abschlußdatum | Prüfer |
|---|---|---|
| München | 29. Juni 2007 | Bertrand, Franck |

EPO FORM 1504 (P04C39)

**Europäisches Patentamt**

## ERKLÄRUNG

die nach Regel 45 des Europäischen Patentübereinkommens für das weitere Verfahren als europäischer Recherchenbericht gilt

Nummer der Anmeldung

EP 07 10 9418

| Die Recherchenabteilung ist der Auffassung, daß die vorliegende Patentanmeldung den Vorschriften des EPÜ in einem solchen Umfang nicht entspricht, daß sinnvolle Ermittlungen über den Stand der Technik auf der Grundlage aller Patentansprüche nicht möglich sind. | KLASSIFIKATION DER ANMELDUNG (IPC) |
|---|---|
| Grund:<br><br>Art.76(1) EPÜ.<br><br>Der Anmelder wird darauf hingewiesen, dass im Zuge der Prüfung eine Recherche durchgeführt werden kann, sollten die einer Erklärung gemäss Regel 45 EPÜ zugrundeliegenden Mängel behoben worden sein (Vgl. EPA-Richtlinien C-VI, 8.5).<br>----- | |

1

EPO FORM 1504 (P04C39)

| Recherchenort | Abschlußdatum | Prüfer |
|---|---|---|
| München | 29. Juni 2007 | Bertrand, Franck |

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9710714 A
- EP 559814 A
- EP 507171 A
- US 5344812 A
- WO 9715576 A, Profluazol
- EP 361114 A
- EP 239414 A


### In der Beschreibung aufgeführte Nicht-Patentliteratur


- Sulfosulfuron, Acifluorfen, Acifluorfen-Natriumsalz, Carfentrazon-ethyl, Cinidon-ethyl, Flumiclorac-pentyl, Fluthiacet-methyl, Oxyfluorfen, 2,4-D, Dicamba, Dichlorprop-P, Fluroxypyr-meptyl, MCPA, Mecoprop-P, Diflufenican, Flurtamone. Farm Chemicals Handbook 2000. Meister Publishing Company, 2000, vol. 86
- Fluazolat (= JV 485 oder Isopropazol. The 1997 Brighton Crop Protection Conference Weeds, Conference Proceedings. vol. 1, 45
- Tritosulfuron, Procarbazon-Natriumsalz, Florasulam, Benzfendizon, Butafenacil. Agrow, Nr. 324. 12. Marz 1999, 26
- Flufenpyr, Flufenpyr-ethyl. Agrow, Nr. 347. 03. Marz 2000, 22
- Flurochloridone. **B. HOCK ; C. FEDTKE ; R.R. SCHMIDT.** Herbizide. Georg Thieme Verlag, 1995, 154
- **S. R. COLBY.** Calculating synergistic and antagonistic responses of herbicide combinations. *Weeds,* 1967, vol. 15, 22